# EUROPEAN PATENT APPLICATION

(11) **EP 2 079 014 A2**
(43) Date of publication of application: **15.07.2009**
(21) Application number: 09000175.1
(22) Date of filing: 08.01.2009
(51) Int. Cl.: G06F 3/12

(54) **A method and apparatus for asynchronous print analysis**

(30) Priority: 08.01.2008 US 19797 P; 05.01.2009 US 348875
(71) Applicant: Sepialine Inc., San Francisco CA 94105 (US)
(72) Inventor: Bazulin, Dmytri, Prevost Quebec J0R 1TO (CA); Kramer, Clayton, Oakland California 94610 (US); Cahill, Michael, San Rafael California 94901 (US); Evans, Jeremy, Lafayette California 94549 (US); Bradley, Raymond, Walnut Creek California 94598 (US)
(74) Representative: Duxbury, Stephen

(57) **Abstract**

The disclosed print tracking software takes the process of asynchronous print analysis currently available in the prior art in which the final print tracking events, such as billing and enforcement, occur in a nonlinear, non-sequential or non-temporal fashion, and expands on this model by achieving similar non-linearity at the front-end analysis phase by re-arranging the timing in which the printing and print analysis takes place within the print software. A print stream extraction component places print stream data from a print job in a known cache location. The print job continues to a printer while independently a software monitor component checks for new cache data and if new cache data is found, invokes an analyzer component which writes print related statistics to a data store for subsequent billing and reporting purposes.

## Description

The present application is related to provisional patent application, serial no. 61/019,797, filed on January 8, 2008, which is incorporated herein by reference and to which priority is claimed pursuant to 35 USC 119.

### Background of the Invention

### Field of the Invention

The invention relates to the field of print analysis software.

### Description of the Prior Art.

Traditionally, print tracking software works by analyzing information from a host operating system (OS), the print data stream, or both. For each print job, printing statistics, such as page size, page quantity, and user and device information, are extracted for subsequent accounting purposes. In some cases a "popup" software component prompts users for accounting information, although the popup component is not always present or necessary. Several other techniques exist for extracting print job information. One method common in the prior art is to receive print event notification from the host OS. Another is to capture and analyze the data contained in the print job. Regardless of specific technique (notification from host OS, print stream capture), currently available print tracking software products in the prior art all follow the same linear path, namely that analysis of a print job must occur during and as a part of the print process. In other words, analysis is performed synchronously with the printing of the document itself.

While the print analysis methods found in the prior art are not without their successes, and while the quota based system of prior art cost recovery software is effective because end users find it convenient to defer billing, while administrators can place limits on an entire company, or set different limits for different users, or for groups of users, they are not without their drawbacks and limitations either. For example, conventional synchronous print tracking software analysis poses a bottleneck in that the tracking software must complete its analysis before the next operation, namely printing, can occur. This thus causes two significant side effects: decreased server performance and decreased stability.

Because analysis requires CPU cycles, it slows down the print process. For a typical "office" type of document (word processing, spreadsheets), performance degradation is negligible. However, extremely large print jobs tend to magnify this slowdown effect. For high volume or complex printing situations, such as graphic arts, engineering drawings and drafting, performance degradation becomes perceptible and undesirable.

Analysis is tightly bound to the print process and effectively becomes part of the print process. Failures in the tracking software during analysis pose a threat not only to the stability of the tracking software, but also to the print operation, host, and the entire computer network in which the operation occurs. When synchronous print tracking software fails, effects can range from annoyances such as latency during the "popup" billing phase, to malformed print jobs that produce "jibberish" output, to a complete inability to print. In extreme situations, wayward print tracking software disables entire computers and entire office networks.

What is needed is a method of performing print analysis that is efficient and easy to use without slowing down the printing process or decreasing the stability of the operating system.

### Brief Summary of the Invention

The illustrated embodiment of the current invention described herein solves the problems of the prior art and others by decoupling the analysis phase from the print process. The illustrated embodiment of the disclosed print tracking software takes the process of asynchronous print analysis currently available in the prior art in which the final print tracking events, such as billing and enforcement, occur in a nonlinear, non-sequential or non-temporal fashion, and expands on this model by achieving similar non-linearity at the front-end analysis phase by re-arranging the timing in which the printing and print analysis takes place within the print software.

More particularly the illustrated embodiment of the invention includes a method of performing asynchronous print tracking on a computer controlled printing system comprising the steps of: generating a print job from a work station; sending the print job to a print server; extracting a print component from the print job at the server; storing the extracted print component in a cache location; analyzing the extracted print component retrieved from the cache location: and storing statistics data derived from the analyzed extracted print component in a data store.

The method further comprises the step of printing the print job using a printer after the method step of storing statistics data derived from the analyzed extracted print component in a data store.

The method further comprises the step of printing the print job using a printer after the method step of sending the print job to a print server.

The method further comprises the step of analyzing the print component in a separate location from the printing of the print component.

The analysis of the extracted print component assumes an observer role on a network print server.

The illustrated embodiment of the invention also includes a method of performing asynchronous print tracking on a computer controlled printing system comprising the steps of: delivering a print job to a print server; generating a print stream extraction component to place print stream data in a cache in a known location; monitoring the known location or receiving a message from the known location indicating the presence of a new data cache; invoking an analyzer component when a new data cache exists; storing statistics to a data store; and continuing the print job to a printer.

The method further comprises the steps of copying the print data to a cache file; and externally and independently analyzing the print data from the printing of the print job.

The step of externally and independently analyzing the print data further comprises off loading the print data to one or more external networked computers.

The method further comprises the step of storing instructions for controlling the asynchronous print tracking on a computer controlled printing system on a computer readable medium.

In the following a means for performing a defining function, a processing circuit or software controlled computer shall all be collectively referenced as a means. The illustrated embodiment includes an apparatus for performing asynchronous print tracking on a computer controlled printing system comprising: at least one user operated workstation capable of generating a print job; a print server coupled to the workstation; a means for extracting a print component from the print job at the server, a data cache coupled to the print server, a means for checking or receiving the indication of new data entered into the data cache; a means for analyzing data in the data cache; a data store coupled to the means for analyzing data; and a printer coupled to the print server.

The apparatus further comprises a plurality of networked computers coupled to the print server.

The means for analyzing data in the data cache further comprises a means for off loading the print data to one or more external networked computers.

The means for analyzing data in the data cache further comprises a means for the analysis to assume an observer role on a network print server.

The apparatus further comprises a means for storing instructions for controlling the asynchronous print tracking on a computer controlled printing system according to any one of the above methods on a computer readable medium.

While the apparatus and method has or will be described for the sake of grammatical fluidity with functional explanations, it is to be expressly understood that the claims, unless expressly formulated under 35 USC 112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 USC 112 are to be accorded full statutory equivalents under 35 USC 112. The invention can be better visualized by turning now to the following drawings wherein like elements are referenced by like numerals.

### Brief Description of the Drawings

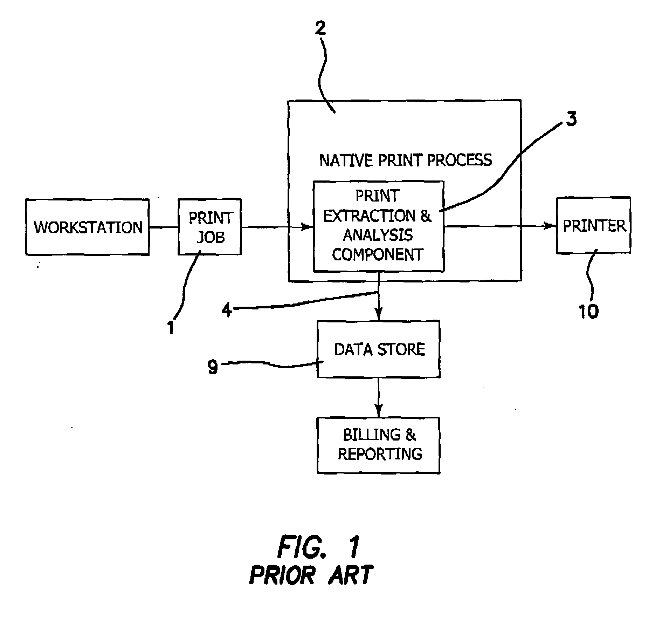

Fig. 1 is a block diagram depicting how the prior art tracks data flow and inhibits the user from efficiently completing print analysis.

Fig. 2 is a block diagram depicting the current invention where the print extraction and the analysis and data store have been decoupled.

The invention and its various embodiments can now be better understood by turning to the following detailed description of the preferred embodiments which are presented as illustrated examples of the invention defined in the claims. It is expressly understood that the invention as defined by the claims may be broader than the illustrated embodiments described below.

### Detailed Description of the Preferred Embodiments

The illustrated embodiment of the current invention achieves its goal of asynchronous print analysis by assuming an observer role on a network print server, Asynchronous print analysis is fully shown and disclosed in U.S. Patent 7,130,070 as herein incorporated by reference in its entirety.

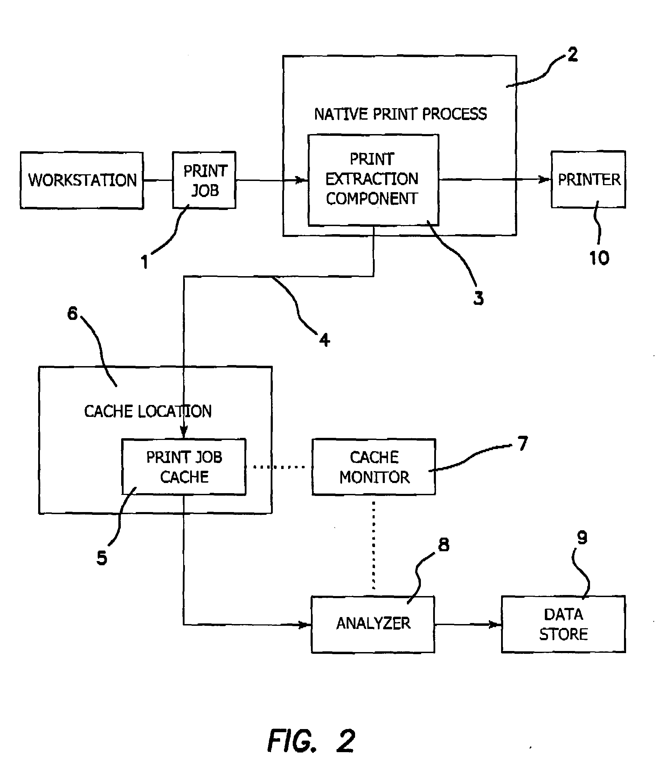

As shown in the block diagram of Fig. 2, when a print job 1 arrives at a print server 2 from a user's workstation 11, a print stream extraction component 3 places print stream data 4 into a cache 5 in a known location 6. The cache 5 preferably assumes the form of a computer file residing in a known folder within in the CPU of a computer, but the cache 5 could potentially assume other forms such as a computer file residing on an external device such as a memory stick or flash drive without departing from the original spirit and scope of the invention.

Returning to Fig. 2, a software monitor component 7 independently checks the known location 6 or receives a message from the known location 6 indicating the presence of new cache data. When new cache data exists, the monitor component 7 invokes the analyzer component 8, which is the software component responsible for the "expensive" (in terms of CPU time) analysis operation by extracting print statistics from the data file. Print statistics are written to the data store 9 by the analyzer component 8, at which point the print job 1 continues on to the printer 10 which completes the printing process. Alternatively, the print job 1 can proceed immediately to the printer 10 and print execution independently of the statistical extraction.

The current invention changes the print stream extraction component, which is the most invasive part of the software, and has reduced it to relative simplicity. The current invention's task, which is to copy print data to the cache file 5, is far less taxing and risky than in the prior art practice of analyzing statistics in real-time as part of the print operation.

Moreover, the relatively complex operation of analyzing the print job has been off loaded to an independent external process that can take its time. Although analysis should be performed quickly enough to provide timely user feedback, the analysis process can operate at a lower priority than if it was integral to the print process. The result of this process is less (or no) perceived latency on the print job, lower CPU and memory consumption at the host computer, and an increase in perceived print performance.

Additionally, the external process can be allowed to fail gracefully, namely any parser failure will not result in a failure to complete the print job.

Finally, the external print analysis process can be distributed. Because parsing becomes cache-based in the current invention, a customer could take advantage of networked computers to off load the analysis to one or more external computers. Doing so increases fault tolerance and offers the customer more configuration options than conventional tracking software that is currently part of the prior art.

Many alterations and modifications may be made by those having ordinary skill in the art without departing from the spirit and scope of the invention. Therefore, it must be understood that the illustrated embodiment has been set forth only for the purposes of example and that it should not be taken as limiting the invention as defined by the following invention and its various embodiments.

Therefore, it must be understood that the illustrated embodiment has been set forth only for the purposes of example and that it should not be taken as limiting the invention as defined by the following claims. For example, notwithstanding the fact that the elements of a claim are set forth below in a certain combination, it must be expressly understood that the invention includes other combinations of fewer, more or different elements, which are disclosed in above even when not initially claimed in such combinations. A teaching that two elements are combined in a claimed combination is further to be understood as also allowing for a claimed combination in which the two elements are not combined with each other, but may be used alone or combined in other combinations. The excision of any disclosed element of the invention is explicitly contemplated as within the scope of the invention,

The words used in this specification to describe the invention and its various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a subcombination or variation of a subcombination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptionally equivalent, what can be obviously substituted and also what essentially incorporates the essential idea of the invention.

## Claims

1. A method of performing asynchronous print tracking on a computer controlled printing system comprising:
generating a print job from a work station;
sending the print job to a print server;
extracting a print component from the print job at the server;
storing the extracted print component in a cache location;
analyzing the extracted print component retrieved from the cache location: and
storing statistics data derived from the analyzed extracted print component in a data store.

2. The method of claim 1 further comprising printing the print job using a printer after the method step of storing statistics data derived from the analyzed extracted print component in a data store.

3. The method of claim 1 further comprising printing the print job using a printer after the method step of sending the print job to a print server.

4. The method of claim 2 further comprising analyzing the print component in a separate location from the printing of the print component.

5. The method of claim 3 further comprising analyzing the print component in a separate location from the printing of the print component.

6. The method of claim 4 where the analysis of the extracted print component assumes an observer role on a network print server.

7. A method of performing asynchronous print tracking on a computer controlled printing system comprising:
delivering a print job to a print server;
generating a print stream extraction component to place print stream data in a cache in a known location;
monitoring the known location or receiving a message from the known location indicating the presence of a new data cache;
invoking an analyzer component when a new data cache exists;
storing statistics to a data store; and
continuing the print job to a printer.

8. The method of claim 7 further comprising:
copying the print data to a cache file; and
externally and independently analyzing the print data from the printing of the print job.

9. The method of claim 8 where externally and independently analyzing the print data further comprises off loading the print data to one or more external networked computers.

10. The method of claim 7 further comprising storing instructions for controlling the asynchronous print tracking on a computer controlled printing system on a computer readable medium.

11. The method of claim 1 further comprising storing instructions for controlling the asynchronous print tracking on a computer controlled printing system on a computer readable medium.

12. An apparatus for performing asynchronous print tracking on a computer controlled printing system comprising:
at least one user operated workstation capable of generating a print job;
a print server coupled to the workstation;
a means for extracting a print component from the print job at the server;
a data cache coupled to the print server,
a means for checking or receiving the indication of new data entered into the data cache;
a means for analyzing data in the data cache;
a data store coupled to the means for analyzing data; and
a printer coupled to the print server.

13. The apparatus of claim 12 further comprising a plurality of networked computers coupled to the print server.

14. The apparatus of claim 12 where the means for analyzing data in the data cache further comprises a means for off loading the print data to one or more external networked computers.

15. The apparatus of claim 12 where the means for analyzing data in the data cache further comprises a means for the analysis to assume an observer role on a network print server.
